# EUROPEAN PATENT SPECIFICATION

(11) **EP 4 023 048 B1**
(45) Date of publication and mention of the grant of the patent: **14.06.2023**
(21) Application number: 21197648.5
(22) Date of filing: 20.09.2021
(51) Int. Cl.: A01D 41/127, A01B 79/00, G06Q 50/02

(54) **CROP TEST-WEIGHT SYSTEM**
GEWICHTSPRÜFUNGSYSTEM FÜR ERNTE
SYSTÈME DE TEST DE POIDS POUR RÉCOLTE

(30) Priority: 29.12.2020 US 202063131477 P
(43) Date of publication of application: 06.07.2022
(73) Proprietor: Agco Corporation, Duluth, Georgia 30096 (US)
(72) Inventor: KOCH, Jared, Hesston, 67062 (US); EKHOLM, Joshua, Hesston, 67062 (US)
(74) Representative: AGCO Intellectual Property Department

(56) References cited:
- US-A1- 2014 141 848
- US-A1- 2016 029 561
- US-A1- 2020 019 159
- US-A1- 2020 027 204

## Description

### CROSS REFERENCE TO RELATED APPLICATION

Not applicable

### TECHNICAL FIELD

The present disclosure relates to test-weight systems and enhancements thereof. A prior art is known from US2014/141848A1.

### BACKGROUND

Test weight is a significant component for calculating and determining the quality of a crop's yield. The farming industry has established standards for acceptable test weights for common crops. For example, with corn, the quality of its yield has a direct relationship to the crop's acceptable test weight of fifty-six pounds per bushel. And, it is often determined that as test weight increases so does quality of the crop.

However, test weight can increase as crops dry. Thus, the perceived quality of a crop can become inflated with drying of a harvested crop. Also, the number of bushels that are sellable from a field of crops can be unacceptable in that the test weight may be deceptive. Thus, there is a technical problem in the reliance on test weight for determining quality of a crop's yield and a need for a system that can improve the reliability of determined test weights.

### SUMMARY

Described herein are improved systems and methods for determining test weight of a crop such that the test weight may be more reliable. In improving the reliability of test weight, the systems and methods overcome at least one technical problem in farming and selling of crops. The systems and methods (or techniques) disclosed herein can provide specific technical solutions to at least overcome the technical problems mentioned in the background section and other parts of the application as well as other technical problems not described herein but recognized by those skilled in the art. The techniques disclosed herein can determine a test weight for a crop immediately after it has been harvested and provide such information to an operator in real time. Additionally, a test-weight map showing determined test weights for different parts of a crop field can be generated. Such a map can then be used to analyze a crop and its field and possibly improve farming practices or some other variance that may affect test weight and thus quality of a crop. In some embodiments, a test-weight map can be combined with a yield map. The advantage of the test-weight map or the combination map over the yield map alone is that the test-weight map or combined map provides additional information on the factors for the yields represented in a yield map. The test-weight map can also be combined with different types of agriculture informational maps such as a soil quality map, a soil moisture map, a soil pH-level map, or a crop or carbon density map. Such a combined map can then be used to analyze a crop and its field and possibly improve farming practices or some other variance that may affect test weight and thus quality of a crop.

In some embodiments, existing grain quality sensors can capture images of a crop as it is harvested or soon after it is harvested. Such sensors can be in a combine harvester or in a bin receiving processed crops from a harvester. This way the images of the processed crops are captured soon after harvesting. This limits the effect of drying of the crops in the determination of the test weight and resolves the technical problem mentioned in the background section and other parts of the application as well as other technical problems not described herein but recognized by those skilled in the art.

From the captured images, size dimensions and orientation of a kernel can be determined (example dimensions can include pixel count, area, length, width and height of a kernel). These parameters of a kernel can then be input for a second determination which compares the determined kernel characteristics to a table having correlations between kernel dimensions and test weights. The output is a test weight of a crop. And, since such technologies can be embedded in a sensor in a combine harvester, test weight for different sections of a crop field can be determined in real time and a map can be generated for improving the crop field. Further, the real-time determinations of test weight can be used as input for improving accuracy of the correlations between kernel dimensions and test weights in the table.

With respect to some embodiments, disclosed herein are computerized methods for determining test weight of a crop, as well as a non-transitory computer-readable storage medium for carrying out technical operations of the computerized methods. The non-transitory computer-readable storage medium has tangibly stored thereon, or tangibly encoded thereon, computer readable instructions that when executed by one or more devices (e.g., one or more personal computers or servers) cause at least one processor to perform a method for improved systems and methods for determining test weight of a crop.

For example, in some embodiments, a method includes receiving, by a computing device, image data of a plurality of kernels of a crop located in a combine harvester as well as determining, by the computing device, one or more dimensions of a kernel of the plurality of kernels based on the image data. And, the method includes determining, by the computing device, a test weight based on the determined one or more dimensions and a table including correlations between kernel dimensions and test weights. In some embodiments, the plurality of kernels includes corn kernels, and the table is a table including correlations between corn kernel dimensions and test weights for corn. In some embodiments, the determining of the one or more dimensions of the kernel includes detecting a plurality of edges of kernels in the plurality of kernels as well as determining an orientation of the kernel based on edges in the plurality of edges associated with the kernel. Also, the determining of the one or more dimensions includes determining the one or more dimensions of the kernel according to the determined orientation of the kernel.

In some embodiments, the method includes communicating, by the computing device, the determined test weight over a network to a user interface device. And, in some embodiments, the method includes displaying the determined test weight by a display of the user interface device.

In some embodiments, the method includes generating, by the computing device, a test-weight map based on the determined test weight, additional determined test weights of additional pluralities of kernels harvested at different locations including the crop, and respective locations where the crop was harvested. And, in some embodiments, the method includes communicating, by the computing device, the generated test-weight map over a network to a user interface device. In some instances, the communication of the generated test-weight map to the user interface device occurs during or after processing of the crop by the combine harvester. Also, in some examples, the method includes displaying the generated test-weight map by a display of the user interface device.

In some embodiments, the method includes capturing, by a sensor, an image of the plurality of kernels as well as generating, by the sensor, the image data of the plurality of kernels based on the image of the plurality of kernels. In such embodiments, the method also includes communicating, by the sensor, the image data to the computing device.

With respect to some embodiments, a system is provided that includes at least one computing device configured to provide improved ways for determining test weight of a crop such that the test weight may be more reliable. And, with respect to some embodiments, a method, such as one of the aforesaid methods, is provided to be performed by at least one computing device. In some example embodiments, computer program code can be executed by at least one processor of one or more computing devices to implement functionality in accordance with at least some embodiments described herein; and the computer program code being at least a part of or stored in a non-transitory computer-readable medium.

These and other important aspects of the invention are described more fully in the detailed description below. The invention is not limited to the particular methods and systems described herein. Other embodiments can be used and changes to the described embodiments can be made in the limits of the wording of the appended claims.

### BRIEF DESCRIPTION OF THE DRAWINGS

The present disclosure will be understood more fully from the detailed description given below and from the accompanying drawings of various embodiments of the disclosure.
FIG. 1 illustrates an example network of combine harvesters that communicate with a computing system through a communication network, in accordance with some embodiments of the present disclosure.
FIG. 2 illustrates is a block diagram of example aspects of the computing system shown in FIG. 1, in accordance with some embodiments of the present disclosure.
FIG. 3 illustrates a schematic side view of one of the combine harvesters shown in FIG. 1 with some portions of the harvester being broken away to reveal internal details of construction, in accordance with some embodiments of the present disclosure.
FIG. 4 illustrates is a block diagram of example aspects of an example computing system that can be a part of a combine harvester, such as that harvester shown in FIG. 3, in accordance with some embodiments of the present disclosure.
FIGS. 5 and 7 illustrate methods in accordance with some embodiments of the present disclosure.
FIG. 6 illustrates an example image of kernels derived from image data, in accordance with some embodiments of the present disclosure.
FIG. 8 illustrates a display of a user interface device displaying a test-weight map showing determined test weights associated with different locations of a field of crops, in accordance with some embodiments of the present disclosure.

### DETAILED DESCRIPTION OF EXAMPLE EMBODIMENTS

Details of example embodiments of the invention are described in the following detailed description with reference to the drawings. Although the detailed description provides reference to example embodiments, it is to be understood that the invention disclosed herein is not limited to such example embodiments. But to the contrary, the invention disclosed herein includes numerous alternatives, modifications and equivalents as will become apparent from consideration of the following detailed description and other parts of this disclosure.

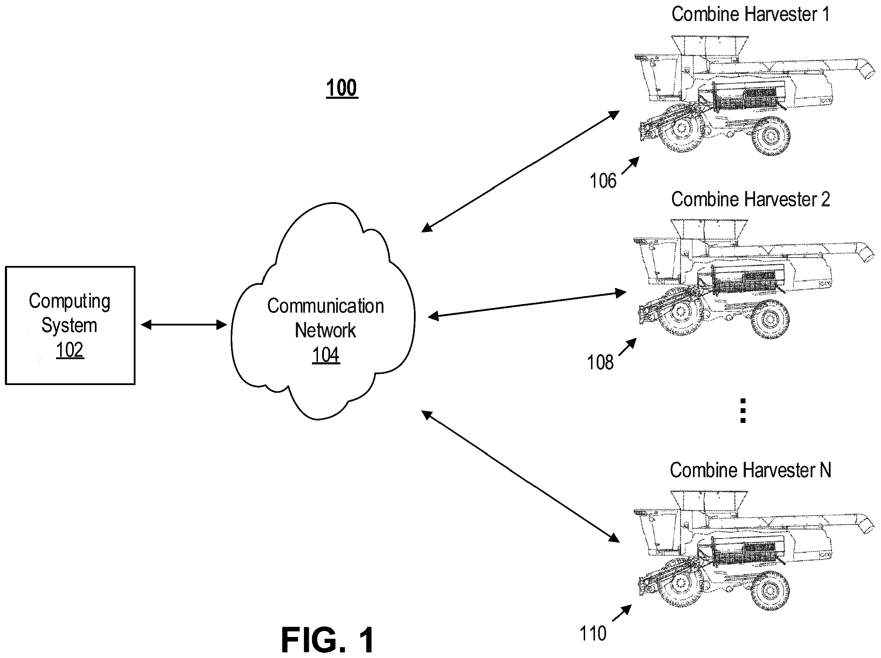

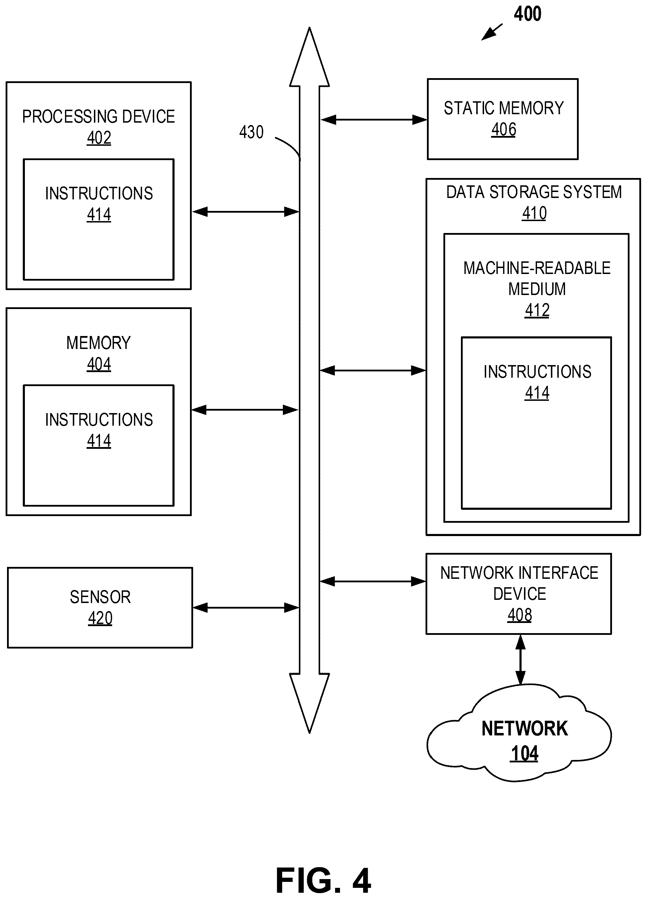

FIG. 1 illustrates network 100 including at last one computing system (e.g., see computing system 102), a communication network 104, and combine harvesters (e.g., see combine harvesters 106, 108, and 110). The combine harvesters are shown communicating with computing system 102 through a communication network 104. Not shown in FIG. 1, the combine harvesters of the network 100 can each include its own computing system (e.g., see computing system 400 shown in FIG. 4). The computing systems in each combine harvester can include a processor, memory, a communication interface and one or more sensors that can make the harvesters individual computing devices. In the case of the communication network 104 including the Internet, the combine harvesters 106, 108, and 110 can be considered Internet of Things (IoT) devices.

The communication network 104 can include one or more local area networks (LAN(s)) and/or one or more wide area networks (WAN(s)). The communication network 104 can include the Internet and/or any other type of interconnected communications network. The communication network 104 can also include a single computer network or a telecommunications network. More specifically, the communication network 104 can include a local area network (LAN) such as a private computer network that connects computers in small physical areas, a wide area network (WAN) to connect computers located in different geographical locations, and/or a middle area network (MAN) to connect computers in a geographic area larger than that covered by a large LAN but smaller than the area covered by a WAN.

At least each shown component of the network 100 (including computing system 102, communication network 104, and combine harvesters 106, 108, and 110) can be or include a computing system which can include memory that can include media. The media can include or be volatile memory components, non-volatile memory components, or a combination of thereof. In general, each of the computing systems can include a host system that uses memory. For example, the host system can write data to the memory and read data from the memory. The host system can be a computing device that includes a memory and a data processing device. The host system can include or be coupled to the memory so that the host system can read data from or write data to the memory. The host system can be coupled to the memory via a physical host interface. The physical host interface can provide an interface for passing control, address, data, and other signals between the memory and the host system.

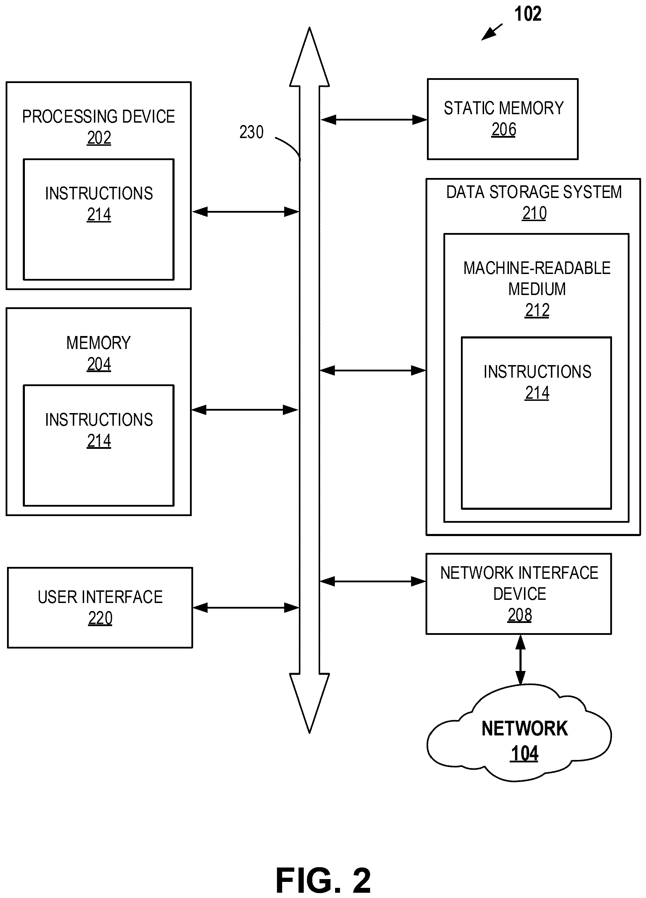

FIG. 2 is a block diagram of example aspects of the computing system 102. FIG. 2 illustrates parts of the computing system 102 within which a set of instructions, for causing the machine to perform any one or more of the methodologies discussed herein, can be executed. In some embodiments, the computing system 102 can correspond to a host system that includes, is coupled to, or utilizes memory or can be used to perform the operations performed by any one of the computing devices, data processors, user interface devices, and sensors described herein. In alternative embodiments, the machine can be connected (e.g., networked) to other machines in a LAN, an intranet, an extranet, and/or the Internet. The machine can operate in the capacity of a server or a client machine in client-server network environment, as a peer machine in a peer-to-peer (or distributed) network environment, or as a server or a client machine in a cloud computing infrastructure or environment. The machine can be a personal computer (PC), a tablet PC, a set-top box (STB), a Personal Digital Assistant (PDA), a cellular telephone, a web appliance, a server, a network router, a switch or bridge, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein.

The computing system 102 includes a processing device 202, a main memory 204 (e.g., read-only memory (ROM), flash memory, dynamic random-access memory (DRAM), etc.), a static memory 206 (e.g., flash memory, static random-access memory (SRAM), etc.), and a data storage system 210, which communicate with each other via a bus 230.

The processing device 202 represents one or more general-purpose processing devices such as a microprocessor, a central processing unit, or the like. More particularly, the processing device can be a microprocessor or a processor implementing other instruction sets, or processors implementing a combination of instruction sets. The processing device 202 can also be one or more special-purpose processing devices such as an application specific integrated circuit (ASIC), a field programmable gate array (FPGA), a digital signal processor (DSP), network processor, or the like. The processing device 202 is configured to execute instructions 214 for performing the operations discussed herein. The computing system 102 can further include a network interface device 208 to communicate over the communication network 104 shown in FIG. 1.

The data storage system 210 can include a machine-readable storage medium 212 (also known as a computer-readable medium) on which is stored one or more sets of instructions 214 or software embodying any one or more of the methodologies or functions described herein. The instructions 214 can also reside, completely or at least partially, within the main memory 204 and/or within the processing device 202 during execution thereof by the computing system 102, the main memory 204 and the processing device 202 also constituting machine-readable storage media.

In some embodiments, the instructions 214 include instructions to implement functionality corresponding to any one of the computing devices, data processors, user interface devices, I/O devices, and sensors described herein. While the machine-readable storage medium 212 is shown in an example embodiment to be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that cause the machine to perform any one or more of the methodologies of the present disclosure. The term "machine-readable storage medium" shall accordingly be taken to include, but not be limited to, solid-state memories, optical media, and magnetic media.

Also, as shown, computing system 102 includes user interface 220 that can include a display and implement functionality corresponding to any one of the user interface devices disclosed herein. A user interface, such as user interface 220, or a user interface device described herein can include any space or equipment where interactions between humans and machines occur. A user interface described herein can allow operation and control of the machine from a human user, while the machine can simultaneously provide feedback information to the user. Examples of a user interface, UI, or user interface device include the interactive aspects of computer operating systems (such as graphical user interfaces), machinery operator controls, and process controls. A UI described herein can include one or more layers, including a human-machine interface (HMI) that interfaces machines with physical input hardware such as keyboards, mice, or pads, and output hardware such as monitors, speakers, and printers. Such a UI can also include a device that implements an HMI-also known as a human interface device (HID). Additional UI layers can be included in UI described herein including tactile UI (touch), visual UI (sight), auditory UI (sound), olfactory UI (smell), and gustatory UI (taste). Such a UI can also include composite user interfaces (CUIs), which are Uls that interact with two or more human senses. In some embodiments, a graphical user interface (GUI), which is composed of a tactile UI and a visual UI capable of displaying graphics, or any other type of UI can present information on test weights to a user of the system. Sound can also be added to a GUI, such that the UI is a multimedia user interface (MUI) can provide test weight information to the user via visual and audio means. UI described herein can also include virtual reality or augmented reality aspects.

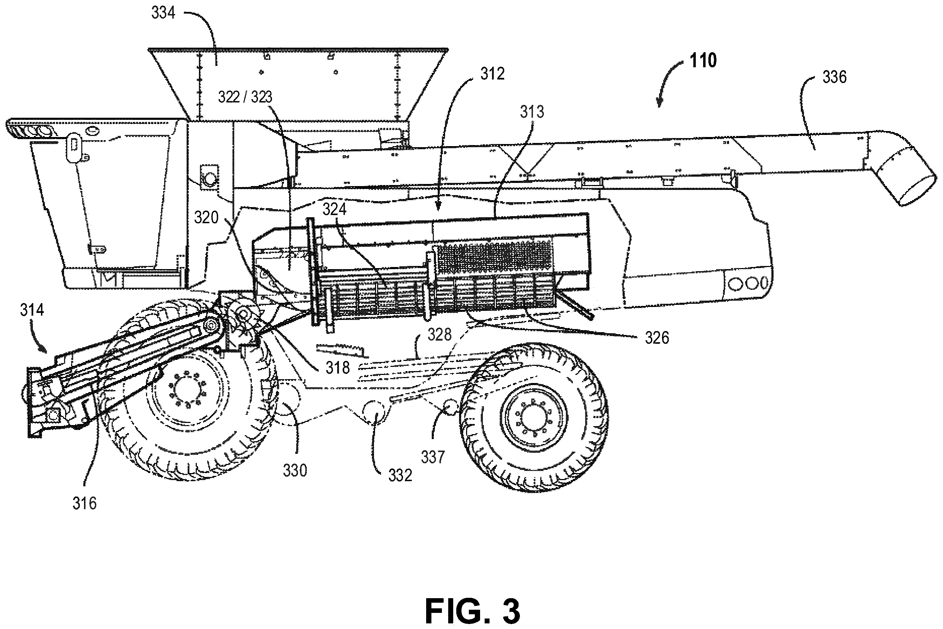

FIG. 3 illustrates a schematic side view of the combine harvester 110 shown in FIG. 1 with some portions of the harvester being broken away to reveal internal details of construction. The combine harvester 110 has processing system 312 that extends generally parallel with the path of travel of the harvester. It is to be understood that such a harvester is being used to illustrate principals herein and the subject matter described herein is not limited to harvesters with processing systems designed for axial flow, nor to axial flow harvesters having only a single processing system. For the sake of simplicity in explaining the principles, this specification will proceed utilizing a single axial flow processing system as the primary example.

The combine harvester 110 includes a harvesting header (not shown) at the front of the machine that delivers collected crop materials to the front end of a feeder house 314. Such materials are moved upwardly and rearwardly within feeder house 314 by a conveyer 316 until reaching a beater 318 that rotates about a transverse axis. Beater 318 feeds the material upwardly and rearwardly to a rotary processing device, in the illustrated instance to a rotor 322 having an infeed auger 320 on the front end thereof. Infeed auger 320, in turn, advances the materials axially into the processing system 312 for threshing and separating. The processing system 312 is housed by processing system housing 313. In other types of systems, conveyer 316 may deliver the crop directly to a threshing cylinder.

The crop materials entering processing system 312 can move axially and helically therethrough during threshing and separating. During such travel, the crop materials are threshed and separated by rotor 322 operating in chamber 323 which concentrically receives the rotor 322. The lower part of the chamber 323 contains concave assembly 324 and a separator grate assembly 326. Rotation of the rotor 322 impels the crop material rearwardly in a generally helical direction about the rotor 322. A plurality of rasp bars and separator bars (not shown) mounted on the cylindrical surface of the rotor 322 cooperate with the concave assembly 324 and separator grate assembly 326 to thresh and separate the crop material, with the grain escaping laterally through concave assembly 324 and separator grate assembly 326 into cleaning mechanism 328. Bulkier stalk and leaf materials are retained by the concave assembly 324 and the separator grate assembly 326 and are impelled out the rear of processing system 312 and ultimately out of the rear of the combine harvester 110.

A blower 330 forms part of the cleaning mechanism 328 and provides a stream of air throughout the cleaning region below processing system 312 and directed out the rear of the combine harvester 110 so as to carry lighter chaff particles away from the grain as it migrates downwardly toward the bottom of the machine to a clean grain auger 332. Clean grain auger 332 delivers the clean grain to an elevator (not shown) that elevates the grain to a storage bin 334 on top of the combine harvester 110, from which it is ultimately unloaded via an unloading spout 336. A returns auger 337 at the bottom of the cleaning region is operable in cooperation with other mechanism (not shown) to reintroduce partially threshed crop materials into the front of processing system 312 for an additional pass through the processing system 312.

As is known in the art, the concave assembly 324 is desirably made of a plurality of concaves positioned axially along the forward portion of the rotor 322. The concaves in the concave assembly 324 also may be arranged in side-by-side pairs with one concave of each pair positioned along one side of the rotor 322 and the other concave of each pair positioned on the opposite side of the rotor 322. The concave assembly 324 is adapted to pivot about pivot point to move the concaves toward and away from rotor 322 so as to adjust the running clearance between rotor 322 and concave assembly 324 and to change the shape of the threshing region.

An operating mechanism can adjustably move the concave assembly 324 toward and away from rotor 322 to adjust the position of the concave assembly 324 relative to rotor 322. The operating mechanism contains an actuator and a linkage assembly connecting the actuator to the concave assembly 324. The actuator can be remotely operable, such as from the cab of combine harvester 110. The linkage assembly transmits the movement of the actuator to the concave assembly 324. The crop materials are introduced into the front end of processing system 312 and move helically within and about the rotor housing in a counterclockwise direction. The threshing action occurs in a threshing region located generally in the bottom half of the processing system 312, between the periphery of rotor 322 and concave assembly 324. When actuator is retracted, the linkage assembly moves the concave assembly 324 inwardly toward rotor 322. When actuator is extended into an open position, the concave assembly 324 is moved away from rotor 322. As the concave assembly 324 is adjusted toward an open position, the threshing region is reshaped to thereby decrease the aggressiveness of the threshing action in that area.

FIG. 4 illustrates is a block diagram of example aspects of computing system 400 that can be a part of a combine harvester, such as combine harvester 110 shown in FIGS. 1 and 3. FIG. 4 illustrates parts of the computing system 400 within which a set of instructions, for causing the machine to perform any one or more of the methodologies discussed herein, can be executed. In some embodiments, the computing system 400 can correspond to a host system that includes, is coupled to, or utilizes memory or can be used to perform the operations performed by any one of the computing devices, data processors, user interface devices, and sensors described herein. In alternative embodiments, the machine can be connected (e.g., networked) to other machines in a local area network, an intranet, an extranet, and/or the Internet. The machine can operate in the capacity of a server or a client machine in client-server network environment, as a peer machine in a peer-to-peer (or distributed) network environment, or as a server or a client machine in a cloud computing infrastructure or environment. The machine can be a PC, a tablet PC, a STB, a PDA, a cellular telephone, a web appliance, a server, a network router, a switch or bridge, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein.

The computing system 400 includes a processing device 402, a main memory 404 (e.g., read-only memory, flash memory, DRAM, etc.), a static memory 406 (e.g., flash memory, SRAM, etc.), and a data storage system 410, which communicate with each other via a bus 430.

The processing device 402 represents one or more general-purpose processing devices such as a microprocessor, a central processing unit, or the like. More particularly, the processing device can be a microprocessor or a processor implementing other instruction sets, or processors implementing a combination of instruction sets. The processing device 402 can also be one or more special-purpose processing devices such as an ASIC, a FPGA, a DSP, network processor, or the like. The processing device 402 is configured to execute instructions 414 for performing the operations discussed herein. The computing system 400 can further include a network interface device 408 to communicate over the communication network 104 shown in FIG. 1.

The data storage system 410 can include a machine-readable storage medium 412 (also known as a computer-readable medium) on which is stored one or more sets of instructions 414 or software embodying any one or more of the methodologies or functions described herein. The instructions 414 can also reside, completely or at least partially, within the main memory 404 and/or within the processing device 402 during execution thereof by the computing system 400, the main memory 404 and the processing device 402 also constituting machine-readable storage media.

In some embodiments, the instructions 414 include instructions to implement functionality corresponding to any one of the computing devices, data processors, user interface devices, I/O devices, and sensors described herein. While the machine-readable storage medium 412 is shown in an example embodiment to be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that cause the machine to perform any one or more of the methodologies of the present disclosure. The term "machine-readable storage medium" shall accordingly be taken to include, but not be limited to, solid-state memories, optical media, and magnetic media.

Also, as shown, computing system 400 includes a sensor 420 that implements functionality corresponding to any one of the sensors disclosed herein. In some embodiments, the sensor 420 can include a camera or another type of optical instrument. The sensor 420 can be or include a device, a module, a machine, or a subsystem that can detect objects, events or changes in its environment and send the information to other electronics or devices, such as a computer processor or a computing system in general. The sensor 420 can be configured to capturing an image or data of a group of kernels, whether or not the kernels have been cleaned. The sensor 420 can also be configured to generate image data of the kernels based on the image of the plurality of kernels and communicate the image data to a computing device or an embedded processor within the sensor. In some embodiments, a processor within the sensor can be configured to receive image data of the kernel and determine one or more dimensions of a kernel of the group of kernels based on the image data. The processor within the sensor can also be configured to determine a test weight based on the determined dimension(s) and a table including correlations between kernel dimensions and test weights.

The sensor 420 or any sensor described herein can include an image sensor. The image sensor can include metal-oxide-semiconductor (MOS) technology or digital semiconductor image sensors. Such sensors can include a charge-coupled device (CCD) or a CMOS sensor. The sensors described herein can also include or be connected to a device that can compress an image of kernels using a known digital image compression technology. The sensors described herein can also include or be connected to a device that includes a digital signal processor (DSP).

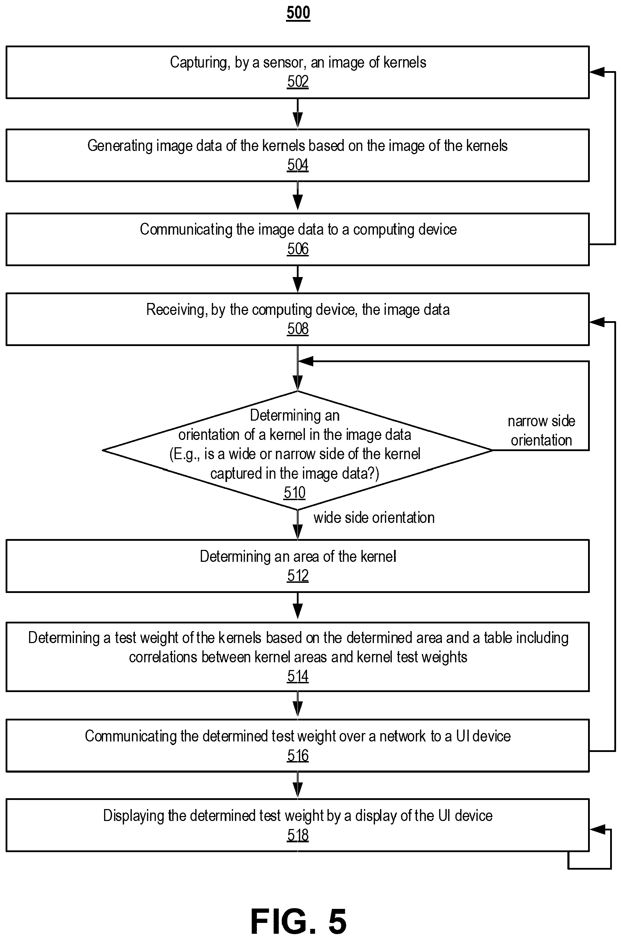

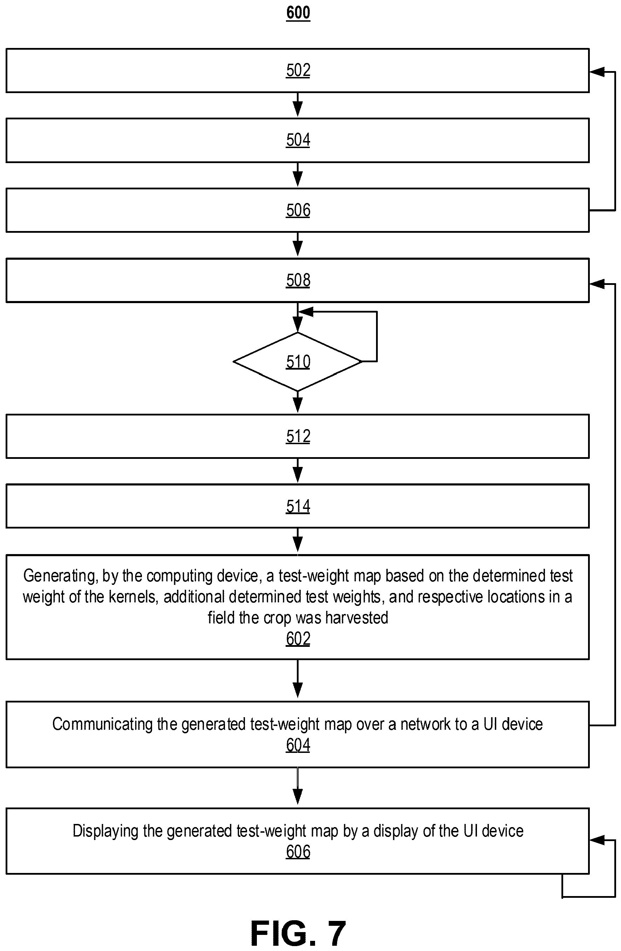

FIGS. 5 and 7 illustrate methods 500 and 600, respectively. Specifically, FIG. 5 shows the steps of method 500. In some embodiments, steps 502, 504, and 506 are performed by a sensor-such as the sensor 420 shown in FIG. 4. In some embodiments, steps 508, 510, 512, 514 and 516 are performed by a computing device-such as the computing system 102 as shown in FIGS. 1 and 2 or computing system 400 as shown in FIG. 4. In some embodiments, step 518 is performed by a user interface (UI) device-such as a UI device that includes a display (e.g., see user interface 220 shown in FIG. 2). In some embodiments, steps 508, 510, 512, 514, 516, 602, and 604 are performed by a computing device-such as the computing system 102 or computing system 400. And, in some embodiments, step 606 is performed by a UI device-such as a UI device that includes a display (e.g., see user interface 220).

Method 500 starts with step 502, which includes capturing, by a sensor (such as the sensor 420), an image of a plurality of kernels of a crop. Step 504 of method 500 includes generating, by the sensor, image data of the plurality of kernels based on the image of the plurality of kernels. The method 500 also includes, at step 506, communicating, by the sensor, the image data to the computing device. The sensor performing steps 502 to 506 can be attached to a surface facing equipment moving the plurality of kernels from a crop processing system (e.g., see processing system 312 as shown in FIG. 3) to a storage bin (e.g., see storage bin 334) in the combine harvester such that the sensor captures images of kernels as the kernels are moved by the equipment. The equipment can include a conveyor or an elevator. The sensor and the computing device can be in the combine harvester. For example, the sensor can be within the housing, such as processing system housing 313, of the crop processing system so that the sensor can capture images of the crop immediately after it has been processed by the processing system. Also, for example, the sensor can be on a wall facing an auger that delivers the clean grain to an elevator or conveyor that elevates the grain to a storage bin on top of the combine harvester-e.g., see auger 332 and storage bin 334 shown in FIG. 3. Also, the sensor can be on a wall facing a returns auger (e.g., see return auger 337). In some embodiments, the sensor can be in the combine harvester and the computing device can be remote to the harvester. In such embodiments, the sensor can communicate to the computing device via a wide area network-e.g., communication network 104 can include the wide area network.

The method 500 continues with step 508, which includes receiving, by a computing device, e.g., see computing system 102 or 400, the image data of the plurality of kernels of the crop. The image data corresponds to harvested crop located in a combine harvester-such as one of combine harvesters 106, 108, and 110. The image data of the plurality of kernels can include image data of kernels located in the harvester after or during processing of the crop by the harvester. The image data of the plurality of kernels can include image data of kernels being transferred to a storage bin in the harvester (e.g., see storage bin 334) on a conveyer or elevator after the processing of the crop. The image data of the plurality of kernels can include image data of kernels stored in a storage bin in the harvester after the processing of the crop.

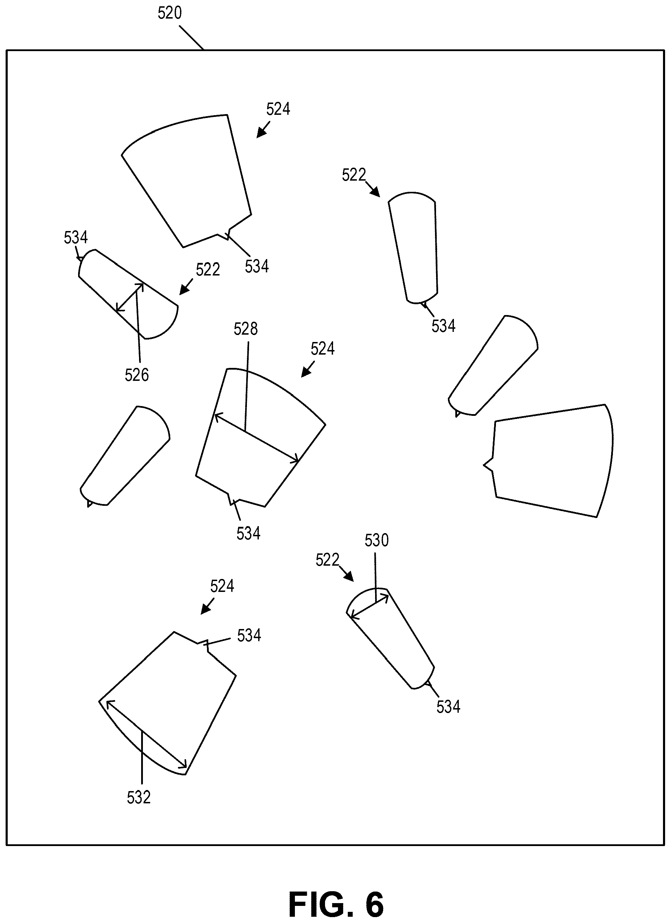

At step 510 of the method 500, the method includes determining, by the computing device, orientation of a kernel of the plurality of kernels based on the image data and image processing. The orientation of a kernel can be a narrow side orientation 522 or a wide side orientation 524 (such as shown in an illustrated image of kernels 520 depicted in FIG. 6). If the kernel is determined to have a wide side orientation, then the method continues with determining an area of the kernel, at step 512. Otherwise, such as if the kernel is determined to have a narrow side orientation, step 510 is repeated with a different kernel of the plurality of kernels. Step 510 is repeated until at least one kernel with a wide side orientation is identified.

The orientation can be determined at step 510 by estimating, by the computing device, one or more dimensions of the kernel. The one or more dimensions can include a pixel count, an area, a length, a height, and a width of the kernel. For example, a width of the kernel can be determined at a middle section of the kernel away from the root of the kernel (e.g., see widths 526 and 528 as shown in FIG. 6). Also, the width can be determined at an outer end of the kernel opposite of the root of the kernel (e.g., see widths 530 and 532 shown in FIG. 6 as well as roots 534). In such an example, the root of the kernel can be identified by the computing device (e.g., see roots 534 shown in FIG. 6). Also, in such an example, the wide side orientation 524 can be determined when a width of a kernel exceeds a first threshold width. The narrow side orientation 522 can be determined when a width of a kernel is less than a minimum threshold width or below the first threshold. In FIG. 6, the widths 526 and 530 are below the minimum threshold width or the first threshold width; thus, it can be determined that associated kernels have a narrow side orientation 522. And, as shown in FIG. 6, the widths 528 and 532 are above the first threshold width; thus, it can be determined that associated kernels have a wide side orientation 524.

At step 512, the method includes determining, by the computing device, an area of the kernel of the plurality of kernels based on the image data and image processing. The area of the kernel can be determined by a determined width of the kernel (e.g., see widths 526, 528, 530 and 532) and a lookup table having corresponding areas for widths of kernels. The area of the kernel can also be determined by counting the number of pixels that are within identified edges of the kernel. The edges can be identified by edge detection. For example, after a width 532 and wide side orientation 524 are determined for a kernel at step 510, an area of the kernel can be determined at step 512 according to the determined width, a second determined width or another dimension of the kernel. Or, for example, the number of pixels in the part of the image representing the kernel can be counted to determine an area of the kernel.

For the aforementioned image processing, an edge detection algorithm and a geometry algorithm can be used to determine the orientation and the one or more dimensions of the kernel in which the dimension(s) can include a pixel count, an area, a width, and/or a height of the kernel, for example. There can also be preprocessing that enhances the image processing. The determining of orientation and at least one dimension of a kernel of the plurality of kernels can include detecting a plurality of edges of the kernel and determining an orientation for the kernel based on the plurality of edges as well as determining at least one dimension of the kernel such as width.

The result of the edge detection can include a set of connected curves that indicate the boundaries a kernel as well as curves that correspond to discontinuities in surface orientation. Applying the edge detection to image of the kernels can significantly reduce the amount of data to be processed in the image data and can filter out information that may be regarded as less relevant, while preserving the important structural properties of the image of the kernels. The edge detection can include search-based or zero-crossing based methods. The search-based methods detect edges by first computing a first-order derivative expression, such as the gradient magnitude, and then searching for local directional maxima of the gradient magnitude using an estimate of the local orientation of the edge, such as the gradient direction. The zero-crossing based methods search for zero crossings in a second-order derivative expression determined from the image. The zero-crossings can include the zero-crossings of the Laplacian or the zero-crossings of a nonlinear differential expression. As a pre-processing step to edge detection, a smoothing stage, typically Gaussian smoothing, can be applied. This can assist with noise reduction.

In the determinations of kernel dimensions and characteristics described herein, digital image processing can be used via general processor or a DSP. The digital image processing can include use of a computer or integrated circuit to process digital images through one or more algorithms. The determinations can also be made using digital signal processing techniques from signals captured by the sensor. Such techniques can include image signal processing which is a sub-category of digital signal processing. The signal or image processing that occurs during the determinations or in a signal or image pre-processing stage can include algorithms to be applied to the input data to avoid the buildup of noise and distortion during processing.

In some embodiments, the digital image processing can include or be based on is a concrete object or event classification, feature extraction, multi-scale signal analysis, pattern recognition, and projection. Also, the digital image processing can include or use anisotropic diffusion, hidden Markov models, image editing, image restoration, independent component analysis, linear filtering, an artificial neural network (ANN), partial differential equations, pixilation, point feature matching, principal components analysis, self-organizing maps, or wavelets.

At step 514 of the method 500, the method includes determining, by the computing device, a test weight based on the determined area of the kernel and a table including correlations between kernel areas and test weights. The computing device can be part of a sensor-such as the sensor that captures the image of the plurality of kernels (e.g., see sensor 420). In some embodiments, dimensions (such as pixel count, width, height, and area) can be determined by a part of the computing device that is in a sensor. Also, the test weight can be determined by a part of the computing device that is remote of the sensor. The determinations of the dimensions and the test weight can be determined by parts of the computing device in a sensor.

In some embodiments, the plurality of kernels can include corn kernels and the table can be a table including correlations between corn kernel dimensions and test weights for corn.

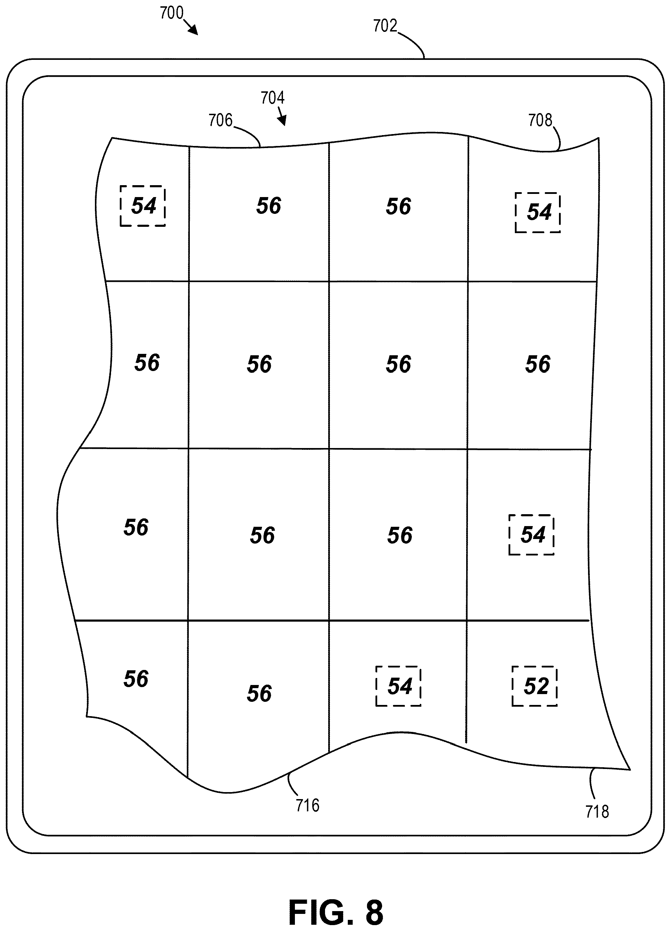

At step 516, the method 500 includes communicating, by the computing device, the determined test weight over a network to a user interface device, e.g., see user interface 220 and communication network 104. The communication of the determined test weight to the user interface device can occur during or after processing of the crop by the combine harvester. The method 500 also includes, at step 518, displaying the determined test weight by a display of the user interface device (e.g., see FIG. 8, which illustrates a display 702 displaying multiple test weights at different locations of a test-weight map 704).

As shown in FIG. 7, method 600 starts with step 502 and continues with steps 504, 506, 508, 510, 512, and 514. After step 514 in which the test weight for the kernels is determined, the method 600 at step 602 includes generating, by the computing device, a test-weight map (e.g., see test-weight map 704). Specifically, at step 602 the method includes generating, by the computing device, a test-weight map based on the determined test weight, additional determined test weights of additional pluralities of kernels harvested at different locations including the crop, and respective locations where the crop was harvested. As shown in FIG. 8, a test-weight map (e.g., see test-weight map 704) can show the determined test weight for each respective location where the crop was harvested. Each respective location can be associated with a corresponding sector of a field including the crop (e.g., see sectors 706 and 708). This can be important because being able to trace test weight variations within a crop field provides a significant agronomic value.

In some embodiments, the test-weight map 704 can be combined with a yield map. The advantage of the test-weight map or the test-weight map combined with the yield map over the yield map alone is that the test-weight map provides additional information on the factors for the yields represented in a yield map. The test-weight map can also be combined with different types of agriculture informational maps such as a soil quality map, a soil moisture map, a soil pH-level map, and/or a crop or carbon density map. Such combined maps can then be used to analyze a crop and its field and possibly improve farming practices or some other variance that may affect test weight and thus quality of a crop.

The method 600 at step 604 also includes communicating, by the computing device, the generated test-weight map over a network to a user interface device (e.g., see user interface device 700 as shown in FIG. 8 and communication network 104). The communication of the generated test-weight map to the user interface device can occur during or after processing of the crop by the combine harvester. The method 600 at step 606 also includes displaying the generated test-weight map by a display of the user interface device (e.g., see display 702 of user interface device 700).

FIG. 8 illustrates display 702 of user interface device 700. The display 702 is shown displaying test-weight map 704. The test-weight map 704 provides determined test weights associated with different locations of a field of crops. As shown in FIG. 8, each sector of the test-weight map 704 includes a respective test weight and the test weights are displayed in the map per sector. Also, the test-weight map 704 provides indicators that graphically represent when test weights are below an acceptable standard for the crop. The indicators in test-weight map 704 are shown by a dashed-line rectangle that contains the corresponding test weight for a sector. As shown, for example, sectors 706 and 716 include test weights that are of an acceptable level. Whereas, sectors 708 and 718 include test weights that are below an acceptable level.

The test weights outputted by the system (such as the test weights provided on a test-weight map) can represent test weight of a bin of kernels (such as a bin of kernels in an active harvester at any point of time or a harvester with a full bin just before delivery of the kernels by the harvester). The test weights outputted by the system can also represent average test weight of respective bins of a plurality of harvesters or an average test weight of bins in general. The test weights outputted can be average test weights for each section of a field or an average test weight for the entire field.

In some embodiments, the aforementioned methods are performed by an example system. Such a system includes an input device configured to receive image data of a plurality of kernels of a crop located in a combine harvester (such as one of combine harvesters 106, 108, and 110). The system also includes a data processor connected to the input device and configured to determine one or more dimensions of a kernel of the plurality of kernels based on the image data as well as determine a test weight based on the determined dimension(s) and a table including correlations between kernel dimensions and test weights. With the system, the image data of the plurality of kernels includes image data of kernels located in the harvester after or during processing of the crop by the harvester. The image data of the plurality of kernels includes image data of kernels being transferred to a storage bin in the harvester on a conveyer or elevator after the processing of the crop (e.g., see storage bin 334 shown in FIG. 3). The image data of the plurality of kernels includes image data of kernels stored in a storage bin in the harvester after the processing of the crop. The dimension(s) include a pixel count, an area, a length, a height, and a width of a kernel. In some embodiments, for image processing in the determination, edge detection and geometry algorithm are used to determine kernel orientation. In some embodiments, there is preprocessing that enhances the image processing. In some embodiments, the determining of dimension(s) of a kernel of the plurality of kernels includes detecting a plurality of edges of kernels in the plurality of kernels and determining an orientation for the kernel based on edges in the plurality of edges associated with the kernel, as well as determining the dimension(s) of the kernel according to the determined orientation of the kernel.

In some embodiments of the system, the input device and data processor are parts of a sensor (such as the sensor 420). In some embodiments, the dimension(s) are determined by a part of the data processor that is in a sensor. In some embodiments, the test weight is determined by a part of the data processor that is remote of the sensor. Alternatively, the determinations of the dimension(s) and the test weight are determined by parts of the data processor in a sensor.

The system includes an output device connected to the data processor and configured to communicate the determined test weight over a network to a user interface device (e.g., see communication network 104 and user interface 220). The communication of the determined test weight to the user interface device occurs during or after processing of the crop by the combine harvester. Also, the system includes the network, the user interface device, and a display of the user interface device configured to display the determined test weight.

In some embodiments of the system, the data processor is configured to generate a test-weight map (e.g., see test-weight map 704) based on the determined test weight, additional determined test weights of additional pluralities of kernels harvested at different locations including the crop, and respective locations where the crop was harvested. The test-weight map shows the determined test weight for each respective location where the crop was harvest. Each respective location is associated with a corresponding sector of a field including the crop. This can be important because being able to trace test weight variations within a crop field provides a significant agronomic value. Also, in such embodiments, the system includes an output device connected to the data processor and configured to communicate the generated test-weight map over a network to a user interface device (e.g., see communication network 104 and user interface 220). The communication of the generated test-weight map to the user interface device occurs during or after processing of the crop by the combine harvester. Such a system also includes the network, the user interface device, and a display of the user interface device configured to display the generated test-weight map.

In some embodiments, the system includes a sensor (such as the sensor 420), configured to capture an image of the plurality of kernels. The sensor is configured to generate the image data of the plurality of kernels based on the image of the plurality of kernels and communicate the image data to the input device over a communication network (e.g., see communication network 104). With the system, the sensor is attached to a surface facing equipment moving the plurality of kernels from a crop processing system to a storage bin in the combine harvester such that the sensor captures images of kernels as the kernels are moved by the equipment (e.g., see storage bin 334). The equipment includes a conveyor or an elevator. The sensor and the computing device are in the combine harvester. In some embodiments, the sensor is in the combine harvester and the computing device is remote to the harvester. In the last-mentioned example, the sensor communicates to the computing device via a wide area network which is a part of the communication network.

In some embodiments, the aforementioned methods are performed by an apparatus. The apparatus includes a sensor (such as the sensor 420). The sensor is configured to capture an image of a plurality of kernels in a combine harvester (such as one of combine harvesters 106, 108, and 110) after the plurality of kernels have been gathered by the combine harvester. The sensor is also configured to generate image data of the plurality of kernels based on the image. The apparatus also includes a computing device. The computing device is configured to receive the image data and determine dimension(s) of a kernel of the plurality of kernels based on the image data. Also, the computing device is configured to determine a test weight based on the determined dimension(s) and a table including correlations between kernel dimensions and test weights.

In some embodiments, the apparatus is a part of one of the aforesaid systems.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a predetermined desired result. The operations are those requiring physical manipulations of physical quantities. Usually, though not necessarily, these quantities take the form of electrical or magnetic signals capable of being stored, combined, compared, and otherwise manipulated. It has proven convenient at times, principally for reasons of common usage, to refer to these signals as bits, values, elements, symbols, characters, terms, numbers, or the like.

It should be borne in mind, however, that these and similar terms are to be associated with the appropriate physical quantities and are merely convenient labels applied to these quantities. The present disclosure can refer to the action and processes of a computing system, or similar electronic computing device, that manipulates and transforms data represented as physical (electronic) quantities within the computing system's registers and memories into other data similarly represented as physical quantities within the computing system memories or registers or other such information storage systems.

The present disclosure also relates to an apparatus for performing the operations herein. This apparatus can be specially constructed for the intended purposes, or it can include a general-purpose computer selectively activated or reconfigured by a computer program stored in the computer. Such a computer program can be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, each coupled to a computing system bus.

The algorithms and displays presented herein are not inherently related to any particular computer or other apparatus. Various general-purpose systems can be used with programs in accordance with the teachings herein, or it can prove convenient to construct a more specialized apparatus to perform the method. The structure for a variety of these systems will appear as set forth in the description below. In addition, the present disclosure is not described with reference to any particular programming language. It will be appreciated that a variety of programming languages can be used to implement the teachings of the disclosure as described herein.

The present disclosure can be provided as a computer program product, or software, that can include a machine-readable medium having stored thereon instructions, which can be used to program a computing system (or other electronic devices) to perform a process according to the present disclosure. A machine-readable medium includes any mechanism for storing information in a form readable by a machine (e.g., a computer). In some embodiments, a machine-readable (e.g., computer-readable) medium includes a machine (e.g., a computer) readable storage medium such as a read only memory ("ROM"), random access memory ("RAM"), magnetic disk storage media, optical storage media, flash memory components, etc.

While the invention has been described in conjunction with the specific embodiments described herein, it is evident that many modifications can be made in the limits of the wording of the appended claims.

## Claims

1. A method, comprising:
receiving, by a computing device, image data of a plurality of kernels of a crop located in a combine harvester;
determining, by the computing device, one or more dimensions of a kernel of the plurality of kernels based on the image data; and
determining, by the computing device, a test weight based on the determined one or more dimensions and a table comprising correlations between kernel dimensions and test weights.

2. The method of claim 1, wherein the plurality of kernels comprises corn kernels, and wherein the table is a table comprising correlations between corn kernel dimensions and test weights for corn.

3. The method of claim 1 or claim 2, wherein the determining of the one or more dimensions of the kernel comprises:
detecting a plurality of edges of kernels in the plurality of kernels;
determining an orientation of the kernel based on edges in the plurality of edges associated with the kernel; and
determining the one or more dimensions of the kernel according to the determined orientation of the kernel.

4. The method of any preceding claim, comprising communicating, by the computing device, the determined test weight over a network to a user interface device; and optionally displaying the determined test weight by a display of the user interface device.

5. The method of any preceding claim, comprising generating, by the computing device, a test-weight map based on the determined test weight, additional determined test weights of additional pluralities of kernels harvested at different locations comprising the crop, and respective locations where the crop was harvested; and optionally communicating, by the computing device, the generated test-weight map over a network to a user interface device.

6. The method of any preceding claim, comprising:
capturing, by a sensor, an image of the plurality of kernels;
generating, by the sensor, the image data of the plurality of kernels based on the image of the plurality of kernels; and
communicating, by the sensor, the image data to the computing device.

7. A system, comprising:
an input device configured to receive image data of a plurality of kernels of a crop located in a combine harvester; and
a data processor connected to the input device and configured to:
determine one or more dimensions of kernels of the plurality of kernels based on the image data; and
determine a test weight based on the determined one or more dimensions and a table comprising correlations between kernel dimensions and test weights.

8. The system of claim 7, comprising an output device connected to the data processor and configured to communicate the determined test weight over a network to a user interface device; and optionally wherein the communication of the determined test weight to the user interface device occurs during or after processing of the crop by the combine harvester.

9. The system of claim 8, comprising the network, the user interface device, and a display of the user interface device configured to display the determined test weight.

10. The system of any of claims 7 to 9, wherein the data processor is configured to generate a test-weight map based on the determined test weight, additional determined test weights of additional pluralities of kernels harvested at different locations comprising the crop, and respective locations where the crop was harvested.

11. The system of claim 10, comprising an output device connected to the data processor and configured to communicate the generated test-weight map over a network to a user interface device.

12. The system of claim 11, wherein the communication of the generated test-weight map to the user interface device occurs during or after processing of the crop by the combine harvester.

13. The system of claim 11 or 12, comprising the network, the user interface device, and a display of the user interface device configured to display the generated test-weight map.

14. The system of any of claims 7 to 13, comprising a sensor, configured to:
capture an image of the plurality of kernels;
generate the image data of the plurality of kernels based on the image of the plurality of kernels; and
communicate the image data to the input device over a communication network.

15. An apparatus, comprising:
a sensor, configured to:
capture an image of a plurality of kernels in a combine harvester after the plurality of kernels have been gathered by the combine harvester; and
generate image data of the plurality of kernels based on the image; and
a computing device, configured to:
receive the image data;
determine one or more dimensions of a kernel of the plurality of kernels based on the image data; and
determine a test weight based on the determined one or more dimensions and a table comprising correlations between kernel dimensions and test weights.

## Patentansprüche

1. Verfahren mit:
einem Empfangen von Bilddaten von mehreren Kernen eines Ernteguts, welches in einem Mähdrescher angeordnet ist, mittels einer Computereinrichtung;
einem Ermitteln mindestens einer Dimension eines Kerns der mehreren Kerne auf Basis der Bilddaten mittels der Computereinrichtung; und
einem Ermitteln eines Testgewichts auf Basis der ermittelten mindestens einen Dimension und einer Tabelle mit Korrelationen zwischen Dimensionen der Kerne und Testgewichten mittels der Computereinrichtung.

2. Verfahren nach Anspruch 1, wobei die mehreren Kerner Korn beinhalten und wobei die Tabelle eine Tabelle mit Korrelationen zwischen Korndimensionen und Testgewichten von Korn ist.

3. Verfahren nach Anspruch 1 oder 2, wobei das Ermitteln der mindestens einen Dimension des Kerns aufweist:
Detektieren mehrerer Kanten von Kernen der mehreren Kerne;
Ermitteln einer Orientierung des Kerns auf Basis von Kanten der mehreren Kanten, die dem Kern zugeordnet sind; und
Ermitteln mindestens einer Dimension des Kerns entsprechend der ermittelten Orientierung des Kerns.

4. Verfahren nach einem der vorhergehenden Ansprüche mit einem Kommunizieren des ermittelten Testgewichts mittels der Computereinrichtung über ein Netzwerk an eine Benutzer-Interface-Einrichtung; und insbesondere mit einem Anzeigen des ermittelten Testgewichts mittels eines Displays der Benutzer-Interface-Einrichtung.

5. Verfahren nach einem der vorhergehenden Ansprüche, mit einem Erzeugen einer Testgewicht-Karte mittels der Computereinrichtung auf Basis des ermittelten Testgewichts, zusätzlicher ermittelter Testgewichte von weiteren mehreren Kernen, die an unterschiedlichen Orten, die Erntegut aufweisen, gewonnen worden sind und zugeordneten Orten, an denen das Erntegut gewonnen worden ist; und insbesondere mit einem Kommunizieren der erzeugten Testgewichts-Karte mittels der Computereinrichtung über ein Netzwerk an eine Benutzer-Interface-Einrichtung.

6. Verfahren nach einem der vorhergehenden Ansprüche mit
einem Erfassen eines Bildes der mehreren Kerne mittels eines Sensors;
einem Erzeugen von Bilddaten der mehreren Kerne mittels des Sensors auf Basis des Bildes oder der Bilder der mehreren Kerne; und
einem Kommunizieren der Bilddaten mittels des Sensors an die Computereinrichtung.

7. System mit
einer Eingangseinrichtung, die geeignet konfiguriert ist zum Empfangen von Bilddaten mehrerer Kerne eines Ernteguts, welche in einem Mähdrescher angeordnet ist; und
einem Datenprozessor, der mit der Eingangseinrichtung verbunden ist und konfiguriert ist zum:
Ermitteln mindestens einer Dimension von Kernen der mehreren Kerne auf Basis der Bilddaten; und
Ermitteln eines Testgewichts auf Basis der Ermittelten mindestens einen Dimension und eine Tabelle, die Korrelationen zwischen Dimensionen der Kerne und Testgewichten aufweist.

8. System nach Anspruch 7 mit einer Ausgangseinrichtung, die mit dem Datenprozessor verbunden ist und konfiguriert ist für ein Kommunizieren des ermittelten Testgewichts über ein Netzwerk an eine Benutzer-Interface-Einrichtung; und wobei optional ein Kommunizieren des ermittelten Testgewichts an die Benutzer-Interface-Einrichtung auftritt während oder nach der Verarbeitung des Ernteguts durch den Mähdrescher.

9. System nach Anspruch 8 mit einem Netzwerk, der Benutzer-Interface-Einrichtung und einem Display der Benutzer-Interface-Einrichtung, welches konfiguriert ist zum Anzeigen des ermittelten Testgewichts.

10. System nach einem der Ansprüche 7 bis 9, wobei der Datenprozessor konfiguriert ist zur Erzeugung einer Testgewichts-Karte auf Basis des ermittelten Testgewichts, zusätzlich ermittelter Testgewichte von zusätzlichen mehreren Kernen, die an unterschiedlichen Orten, die Erntegut aufweisen, gewonnen worden sind, und zugeordneten Orten, an denen das Erntegut gewonnen worden ist.

11. System nach Anspruch 10 mit einer Ausgangseinrichtung, die mit dem Datenprozessor verbunden ist und konfiguriert ist für ein Kommunizieren der erzeugten Testgewichts-Karte über ein Netzwerk an eine Benutzer-Interface-Einrichtung.

12. System nach Anspruch 11, wobei das Kommunizieren der erzeugten Testgewichts-Karte an die Benutzer-Interface-Einrichtung während oder nach dem Verarbeiten des Ernteguts durch den Mähdrescher erfolgt.

13. System nach Anspruch 11 oder 12 mit einem Netzwerk, der Benutzer-Interface-Einrichtung und einem Display der Benutzer-Interface-Einrichtung, welches geeignet konfiguriert ist zur Anzeige der erzeugten Testgewichts-Karte.

14. System nach einem der Ansprüche 7 bis 13 mit einem Sensor, der konfiguriert ist für ein Erfassen eines Bildes mehrerer Kerne;
Erzeugen von Bilddaten der mehreren Kerne auf Basis des Bildes der mehreren Kerne; und
ein Kommunizieren der Bilddaten an eine Eingangseinrichtung über ein Kommunikationsnetzwerk.

15. Apparat mit
einem Sensor der konfiguriert ist für
ein Erfassen eines Bilds mehrerer Kerne in einem Mähdrescher, nach dem mehrere Kerne von dem Mähdrescher gesammelt worden sind; und
ein Erzeugen von Bilddaten der mehreren Kerne auf Basis des Bildes; und
einer Computereinrichtung, die konfiguriert ist für
ein Empfangen der Bilddaten;
ein Ermitteln mindestens einer Dimension eines Kerns der mehreren Kerne auf Basis der Bilddaten; und
ein Ermitteln eines Testgewichts auf Basis der ermittelten mindestens einen Dimension und einer Tabelle mit Korrelationen zwischen Dimensionen des Kerns und Testgewichten.

## Revendications

1. Procédé, comprenant :
la réception, par un dispositif informatique, de données d'image d'une pluralité de grains d'une culture située dans une moissonneuse-batteuse ;
la détermination, par le dispositif informatique, d'une ou plusieurs dimensions d'un grain de la pluralité de grains sur la base des données d'image ; et
la détermination, par le dispositif informatique, d'un poids de test sur la base des une ou plusieurs dimensions déterminées et d'une table comprenant des corrélations entre les dimensions de grain et les poids de test.

2. Procédé selon la revendication 1, dans lequel la pluralité de grains comprend des grains de maïs et dans lequel la table est une table comprenant des corrélations entre des dimensions de grain de maïs et des poids de test pour le maïs.

3. Procédé selon la revendication 1 ou 2, dans lequel la détermination des une ou plusieurs dimensions du grain comprend :
la détection d'une pluralité de bords de grains sur la pluralité de grains ;
la détermination d'une orientation du grain sur la base de bords dans la pluralité de bords associés au grain ; et
la détermination des une ou plusieurs dimensions du grain en fonction de l'orientation déterminée du grain.

4. Procédé selon l'une quelconque des revendications précédentes, comprenant la communication, par le dispositif informatique, du poids de test déterminé sur un réseau à un dispositif d'interface d'utilisateur ; et, en variante, l'affichage du poids de test déterminé par un moyen d'affichage du dispositif d'interface d'utilisateur.

5. Procédé selon l'une quelconque des revendications précédentes, comprenant la production, par le dispositif informatique, d'une carte poids de test sur la base du poids de test déterminé, de poids de test déterminés additionnels de pluralités additionnelles de grains moissonnés à différents emplacements comprenant la culture, et d'emplacements respectifs sur lesquels la culture a été moissonnée ; et, en variante, la communication, par le dispositif informatique, de la carte de poids de test produite sur un réseau à un dispositif d'interface d'utilisateur.

6. Procédé selon l'une quelconque des revendications précédentes, comprenant :
la capture, par un capteur, d'une image de la pluralité de grains ;
la production, par le capteur, des données d'image de la pluralité de grains sur la base de l'image de la pluralité de grains ; et
la communication, par le capteur, des données d'image au dispositif informatique.

7. Dispositif, comprenant :
un dispositif d'entrée configuré de manière à recevoir des données d'image d'une pluralité de grains d'une culture située dans une moissonneuse-batteuse ; et
une unité de traitement numérique couplée au dispositif d'entrée et configurée de manière à :
déterminer une ou plusieurs dimensions des grains de la pluralité de grains sur la base des données d'image ; et
déterminer un poids de test sur la base des une ou plusieurs dimensions déterminées et d'une table comprenant des corrélations entre les dimensions de grain et les poids de test.

8. Dispositif selon la revendication 7, comprenant un dispositif de sortie couplé à l'unité de traitement numérique et configuré de manière à communiquer le poids de test déterminé sur un réseau à un dispositif d'interface d'utilisateur ; et, en variante, dans lequel la communication du poids de test déterminé au dispositif d'interface d'utilisateur est assurée pendant ou après le traitement de la culture par la moissonneuse-batteuse.

9. Dispositif selon la revendication 8, comprenant le réseau, le dispositif d'interface d'utilisateur et un moyen d'affichage du dispositif d'interface d'utilisateur configuré de manière à afficher le poids de test déterminé.

10. Dispositif, selon l'une quelconque des revendications 7 à 9, dans lequel l'unité de traitement numérique est configurée de manière à produire une carte de poids de test sur la base du poids de test déterminé, des poids de test additionnels déterminés de pluralités additionnelles de grains moissonnés à différents emplacements comprenant la culture et des emplacements respectifs sur lesquels la culture a été moissonnée.

11. Dispositif selon la revendication 10, comprenant un dispositif de sortie couplé à l'unité de traitement numérique et configuré de manière à communiquer la carte de poids de test produite sur un réseau à un dispositif d'interface d'utilisateur.

12. Dispositif selon la revendication 11, dans lequel la communication de la carte de poids de test produite au dispositif d'interface d'utilisateur est assurée pendant ou après traitement de la culture par la moissonneuse-batteuse.

13. Dispositif selon la revendication 11 ou 12, comprenant le réseau, le dispositif d'interface d'utilisateur et un moyen d'affichage du dispositif d'interface d'utilisateur configuré de manière à afficher la carte de poids de test produite.

14. Dispositif, selon l'une quelconque des revendications 7 à 13, comprenant un capteur, configuré de manière à :
capturer une image de la pluralité de grains ;
produire des données d'image de la pluralité de grains sur la base de l'image de la pluralité de grains ; et
communiquer les données d'image au dispositif d'entrée sur un réseau de transmission.

15. Dispositif comprenant :
un capteur, configuré de manière à :
capturer une image d'une pluralité de grains dans une moissonneuse-batteuse après que la pluralité de grains a été collectée par la moissonneuse-batteuse ; et
produire des données d'image de la pluralité de grains sur la base de l'image ; et
un dispositif informatique, configuré de manière à :
recevoir les données d'image ;
déterminer une ou plusieurs dimensions d'un grain de la pluralité de grains sur la base des données d'image ; et
déterminer un poids de test sur la base de la ou des dimensions déterminées et d'une table comprenant des corrélations entre des dimensions de grain et des poids de test.
